# EUROPÄISCHE PATENTSCHRIFT

(11) **EP 2 534 370 B1**
(45) Veröffentlichungstag und Bekanntmachung des Hinweises auf die Patenterteilung: **07.10.2015**
(21) Anmeldenummer: 12721756.0
(22) Anmeldetag: 25.04.2012
(51) Int. Cl.: F03B 13/14, F03B 13/24

(54) **TURBINENANLAGE ZUM NUTZEN VON ENERGIE AUS MEERESWELLEN**
TURBINE SYSTEM FOR UTILIZING ENERGY FROM OCEAN WAVES
TURBINE DESTINÉE À EXPLOITER L'ÉNERGIE DE LA HOULE MARINE

(30) Priorität: 06.05.2011 DE 102011100756
(43) Veröffentlichungstag der Anmeldung: 19.12.2012
(73) Patentinhaber: Voith Patent GmbH, 89522 Heidenheim (DE)
(72) Erfinder: HEATH, Tom, IV10 Graigburn (GB); BRONOWSKI, Helmut, 89522 Heidenheim (DE)
(74) Vertreter: Dr. Weitzel & Partner
(86) Internationale Anmeldenummer: PCT/EP2012/001763
(87) Internationale Veröffentlichungsnummer: WO 2012/152378

(56) Entgegenhaltungen:
- EP-A2- 0 053 458
- DE-A1- 4 345 270
- GB-A- 2 250 321
- JP-A- 60 090 989
- JP-A- 61 089 983
- US-A1- 2003 133 782

## Beschreibung

Die Erfindung betrifft eine Turbinenanlage zum Ausnutzen von Meereswellen und zum Umsetzen der darin enthaltenen Energie in elektrische Energie.

EP 0 053 458 A2 beschreibt eine Turbinenanlage, die der Erfindung am nächsten kommt. Weitere Anlagen sind beispielsweise aus EP 0 000 441 A1, GB 2 250 321 A und US 2003/133782 A1 bekannt geworden.

Anlagen dieser Art sind wie folgt aufgebaut: Sie umfassen eine Kammer, die an ihrem unteren Ende offen ist und mit diesem offenen Ende in das Meer eintaucht. An ihrem oberen Ende hat sie ebenfalls eine Öffnung. Es ist ferner eine Rohrleitung vorgesehen, das dem Führen einer Luftströmung dient. Die Rohrleitung ist mit seinem einen offenen Ende an die obere Öffnung der Kammer angeschlossen. Am anderen Ende der Rohrleitung befindet sich eine Energieeinheit mit einem Turbinenrotor, axialer, halbaxialer oder radialer Bauart sowie gegebenenfalls mit einem, mit dem Rotor in Triebverbindung stehenden elektrischen Generator.

Der Spiegel des Meerwassers innerhalb der Kammer hebt und senkt sich ständig zufolge der Wellen des Meeres; die Wellenbewegung wirkt somit in die Kammer hinein. Mit jedem Heben des Wasserspiegels ist ein Verdrängen des in der Kammer befindlichen Luftquantums enthalten. Die Luft wird beim Heben des Wasserspiegels verdrängt und strömt durch die obere Öffnung der Kammer und somit auch durch die Rohrleitung, in welchem sich die Turbine befindet. Dieses Prinzip ist unter dem Begriff OWC → "Oscillating Water Column" bekannt. Der Luftstrom treibt die Turbine an, und damit auch den elektrischen Generator, der als solcher elektrische Energie erzeugt.

Beim Absenken des Wasserspiegels in der Kammer findet derselbe Vorgang statt, nur dass der Luftstrom sich umkehrt. Es gibt mechanische Möglichkeiten, den Turbinenrotor in ein- und demselben Drehsinn umlaufen zu lassen, ungeachtet der Richtung des Luftstromes. Eine solche Möglichkeit ist beispielsweise in GB 1 595 700 B beschrieben - sogenannte Wells-Turbine.

Die in den Weltmeeren enthaltene Wellenenergie ist unerschöpflich. Die mittlere Jahreswellenenergie liegt bei einer Tiefe von 10 m in der Größenordnung von 10 kW/m, und bei einer Tiefe von 40 m bei 50 kW/m. Das Problem liegt jedoch darin, die reichlich vorhandene Energie auf wirtschaftliche Weise auszunutzen, so dass die Kosten pro Kilowattstunde wettbewerbsfähig sind. Dies ist bei zahlreichen Anlagen zum Umsetzen von erneuerbarer Energie, so wie sie in der Natur anfällt, in wirtschaftlich verwertbare Energie zu akzeptablen Kosten häufig nicht möglich. Die Wirtschaftlichkeit einer Anlage der beschriebenen Art hängt somit sehr stark vom Wirkungsgrad ab. Die Möglichkeiten der Einflussnahme sind beschränkt.

Der Meeresspiegel steigt in der Zeiteinheit in unterschiedlich starkem Maße an. Kommt es bei Auftreten einer besonders hohen Welle bei stürmischer See zu einem übermäßig starken Anstieg, so erhöht sich auch die Geschwindigkeit der Luftströmung in der Rohrleitung, und damit der Volumenstrom, mit dem die Turbine beaufschlagt wird.

Dies kann nachteilig sein, da es zu einem Abriss der Strömung in der Turbine kommt. Dies führt zu einem Leistungsabfall der Turbine, zu Geräuschentwicklung, zur Störung des Rotorlaufes und im Extremfall zu mechanischen Schädigungen der Turbine.

Als Abhilfe hat man in der Rohrleitung zwischen der Kammer und der Turbine Dämpfungseinrichtungen vorgesehen. Auch ist es bekannt, Druckbegrenzungsventile vorzusehen, die den Druck in der Kammer begrenzen.

Alle diese Bemühungen haben nicht zum gewünschten Ergebnis geführt. Bei Druckbegrenzungsventilen wird der Druck in der Kammer und damit in der Rohrleitung durch Ablassen von unter Druck stehender Luft verringert. Dies bedeutet ein Verlust an Energie, die an sich nutzbar wäre, und damit eine Verringerung des Gesamt-Wirkungsgrades der Anlage. Außerdem arbeiten die bekannten Vorrichtungen zur Druckbegrenzung relativ träge.

Das Problem der Dämpfung bei Anlagen der in Rede stehenden Art stellt sich besonders im Nordatlantik. Etwa 50 Prozent der Wellen kraft im Küstenbereich enthält 15 Prozent Sturmwellen.

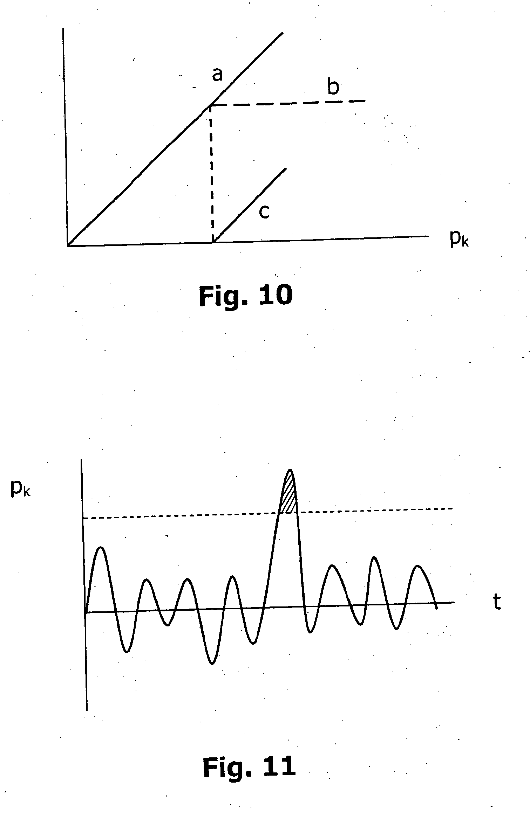

Die Idealfunktion der perfekten Dämpfungseinrichtung lässt sich anhand der Figur 10 erläutern: Sofern die Turbine den gesamten Luftdruck der Kammer aufnehmen kann, wird die Druckluft der Turbine gemäß Linie (a) voll und ganz zugeführt.

Erreicht die Turbine durch den steigenden Kammerdruck die maximale Drehzahl, so führt jegliche Steigerung des Kammerdruckes zu einem Abreißen der Strömung; somit gibt es einen maximal gewünschten Druckabfall durch die Turbine - siehe Linie (b).

Die Differenz zwischen dem momentanen Kammerdruck und dem maximal zulässigen Druckabfall durch die Turbine ist in Linie (c) dargestellt. Die ideale Charakteristik einer Dämpfungseinrichtung verhindert das Überschreiten der Linie (b).

Das Phänomen einer übermäßig hohen Welle lässt sich anhand der Figur 11 veranschaulichen: Auf der Ordinate ist der Kammerdruck p_{K} wiedergegeben, auf der Abszisse die Zeit t.

Die gestrichelte Linie bedeutet den maximal zulässigen Druck, der von der Turbine ohne Strömungsabriss verarbeitet werden kann. Die Druckspitze oberhalb der gestrichelten Linie muss durch Dämpfen beseitigt werden.

Der Erfindung liegt die Aufgabe zugrunde, eine Turbinenanlage gemäß dem Oberbegriff von Anspruch 1 derart zu gestalten, dass das Auftreffen von übermäßig hohen Volumenströmen auf dem Rotor der Turbine verhindert wird, und zwar mittels einer Dämpfungseinrichtung, die bei Spitzen von Volumenströmen rasch reagiert, und die einfach im Aufbau ist.

Diese Aufgabe wird durch die Merkmale von Anspruch 1 gelöst.

Durch die Erfindung werden nicht nur schädliche Druckschwalle verhindert. Vielmehr wird auch vermieden, dass Energie verloren geht. Sperrt die erfindungsgemäße Jalousieeinrichtung bei Auftreten eines unzulässig hohen Luftdruckes in der Kammer ab, so bleibt die "übermäßig hohe" Energie erhalten und verlängert den Arbeitszyklus. Sie wird zunächst das Wasserniveau in der Kammer absenken, steht aber bei einem Rückgang des Meeresspiegels wieder voll und ganz zur Verfügung.

Das Wesen der Erfindung besteht in der Anwendung einer Dämpfungseinrichtung in Gestalt einer Jalousie, umfassend zwei Elemente, die wenigstens einen Teil des Querschnittes der Rohrleitung abdecken. Die beiden Elemente sind nach Art einer Jalousie perforiert. Die Perforationen können jegliche Form haben, beispielsweise Bohrungen, rechteckige Durchbrechungen und so weiter. Sie werden relativ zueinander verschoben. Dabei braucht der Hub der Verschiebebewegung nur minimal zu sein. Durch die genannte Verschiebebewegung kann ein ganz kleiner Teil des Querschnittes der Rohrleitung abgesperrt werden, ein etwas größerer, oder der Querschnitt kann total abgesperrt werden. Das mehr oder minder starke Absperren erfolgt stufenlos.

Das Betätigen der erfindungsgemäßen Jalousie kann sowohl selbsttätig erfolgen, als auch mechanisch, elektrisch, pneumatisch oder hydraulisch betätigt werden. Es kann beispielsweise eine nicht-lineare Feder oder dergleichen vorgesehen werden, um einer Bewegung des beweglichen der beiden Elemente entgegenzuwirken. Durch entsprechende Auswahl der Federcharakteristika lässt sich für jeden Kammerdruck eine Gleichgewichtsposition des beweglichen Elementes ermitteln.

Stattdessen kann auch eine Vorspannung auf die Feder derart eingestellt werden, dass sich das bewegliche Element solange nicht bewegt, bis der maximal zulässige Turbinendruck überschritten wird.

Die Verschiebebewegung der beiden Elemente kann sowohl in horizontaler Richtung, als auch in vertikaler Richtung erfolgen, wobei das Eigengewicht die Federwirkung unterstützt, als auch einen Schließvorgang bewirkt, zum Beispiel bei Netztrennung oder Stromausfall (Sicherheitsabsperrorgan).

Die beiden Elemente der Jalousie sind in der Regel ebene Platten aus Stahl oder anderen Materialien.

Die Erfindung ist anhand der Zeichnungen näher erläutert. Darin ist im Einzelnen folgendes dargestellt:
- Figur 1: zeigt in einer schematischen perspektivischen Ansicht ein Wellenenergiekraftwerk gemäß dem Stande der Technik.
- Figur 2: zeigt das Wellenenergiekraftwerk gemäß Figur 1 in einem Vertikalschnitt.
- Figur 3: zeigt in perspektivischer Darstellung eine sogenannte Wells-Turbine als energieerzeugende Einheit gemäß dem Stande der Technik.
- Figur 4: ist eine schematische Darstellung einer Turbinenanlage gemäß der Erfindung.
- Figur 5: ist eine Draufsicht auf eine erfindungsgemäße Jalousieeinrichtung.
- Fig. 6, 7, 8: zeigen die Jalousieeinrichtung gemäß Figur 5 jeweils in einem vertikalen Axialschnitt durch die Rohrleitung, und zwar in verschiedenen Absperrpositionen.
- Figur 9: zeigt wiederum eine Jalousie in eingebautem Zustand.
- Figur 10: zeigt die Idealfunktion der perfekten Dämpfungseinrichtung.
- Figur 11: zeigt das Phänomen einer übermäßig hohen Welle.

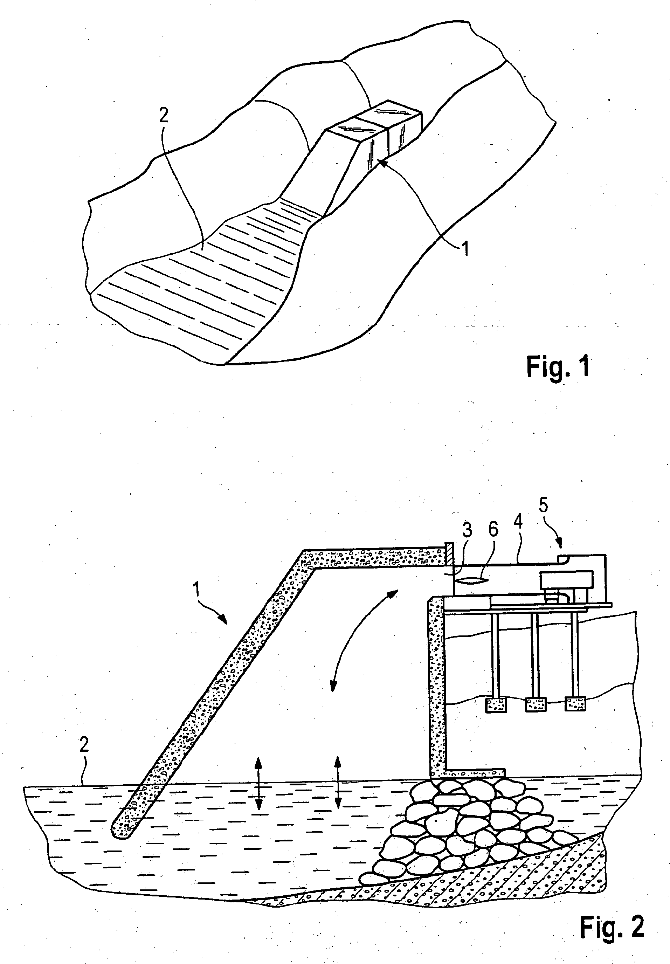

Das in Figur 1 gezeigte Wellenenergiekraftwerk befindet sich in einem Küstenbereich, am besten in einer trichterförmigen Bucht, in denen eine hohe Energiekonzentration herrscht. Die Bucht steht mit der offenen See in Verbindung. Das Wasser befindet sich ständig in Bewegung - siehe die Wellen 2. Vom Kraftwerk ist im Wesentlichen nur eine Kammer 1 zu sehen.

Die Kammer ist unten offen, wie man aus Figur 2 erkennt. Die Wellen 2 gelangen zur Kammer 1. Sie führen dazu, dass sich der Pegel in der Kammer in vertikaler Richtung zwischen einem unteren und einem oberen Pegel hebt und senkt - siehe die beiden vertikalen Pfeile.

Beim Anheben des Wasserspiegels wird die in der Kammer 1 eingeschlossene Luft nach oben verdrängt. Sie strömt entlang dem gekrümmten Pfeil. Sie verlässt die Kammer 1 durch die obere Öffnung 3. An die obere Öffnung 3 ist eine Rohrleitung 4 angeschlossen. Diese enthält eine Energieerzeugungseinheit 5. Die Energieerzeugungseinheit 5 umfasst eine Turbine axialer, halbaxialer, oder radialer Bauart mit einem zu dieser koaxialen Generator.

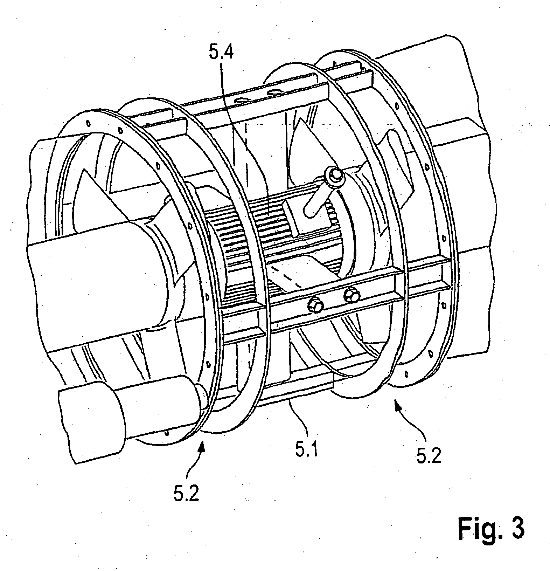

Wie man aus Figur 3 erkennt, umfasst die hauptsächlich eingesetzte Rohrturbine 5 ferner zwei Rotoren 5.2, 5.3. Diese sind zur Rohrleitung 4 koaxial angeordnet und von diesem umschlossen. Die beiden Rotoren 5.2, 5.3 arbeiten auf einen Generator 5.4. Dabei sind die beiden Rotoren 5:2, 5.3 derart gestaltet und angeordnet, dass sie stets in ein und demselben Drehsinn umlaufen, ungeachtet dessen, von welcher Seite der Luftstrom in die Rohrleitung 4 eintritt. Dies ist deshalb notwendig beziehungsweise vorteilhaft, weil die Luft beim Anheben des Wasserspiegels in Kammer 1 landeinwärts strömt, und beim Absenken landauswärts.

Der Generator 5.4 gibt elektrische Energie an ein hier nicht dargestelltes Stromnetz ab.

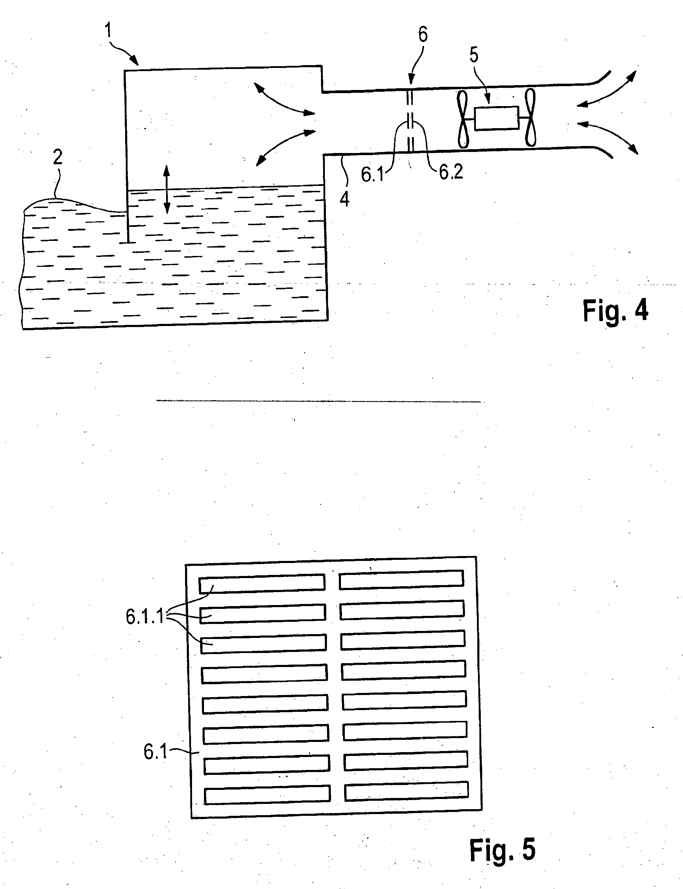

Die in Figur 4 dargestellte erfindungsgemäße Turbinenanlage umfasst wiederum eine Kammer 1, die unten offen ist, und in der der Meeresspiegel eine Auf- und Abwärtsbewegung ausführt.

An die Kammer 1 ist wiederum eine Rohrleitung 4 angeschlossen. In dieser befindet sich eine Energieeinheit 5 mit einer Wellsturbine und einem Generator.

Der Energieeinheit 5 ist eine erfindungsgemäße Dämpfungseinrichtung 6 vorgeschaltet. Diese umfasst zwei Platten, die parallel zueinander und senkrecht zur Richtung des Luftstromes angeordnet sind und im vorliegenden Falle den gesamten Querschnitt der Rohrleitung 4 ausfüllen.

Wie man anhand der gekrümmten Pfeile erkennt, entstehen Luftströme von der Kammer 1 zur Energieeinheit 5 hin, sowie auch in umgekehrter Richtung, je nach dem Heben und Senken des Wasserspiegels in der Kammer 1.

Die Dämpfungseinrichtung 6 ist nach Art einer Jalousie aufgebaut. Sie umfasst zwei Platten 6.1 und 6.2. Diese können relativ zueinander und aneinander gleiten. Dabei wird im Allgemeinen eine der beiden Platten feststehen, und die andere beweglich sein.

Figur 5 zeigt die Jalousieeinrichtung 6 in Draufsicht, genauer gesagt deren eine Platte 6.1. Die Platte weist eine Vielzahl von Schlitzen 6.1.1 auf, die sowohl nebeneinander als auch übereinander angeordnet sind.

Die zweite, hier nicht gezeigte Platte 6.1.2 ist identisch im Aufbau.

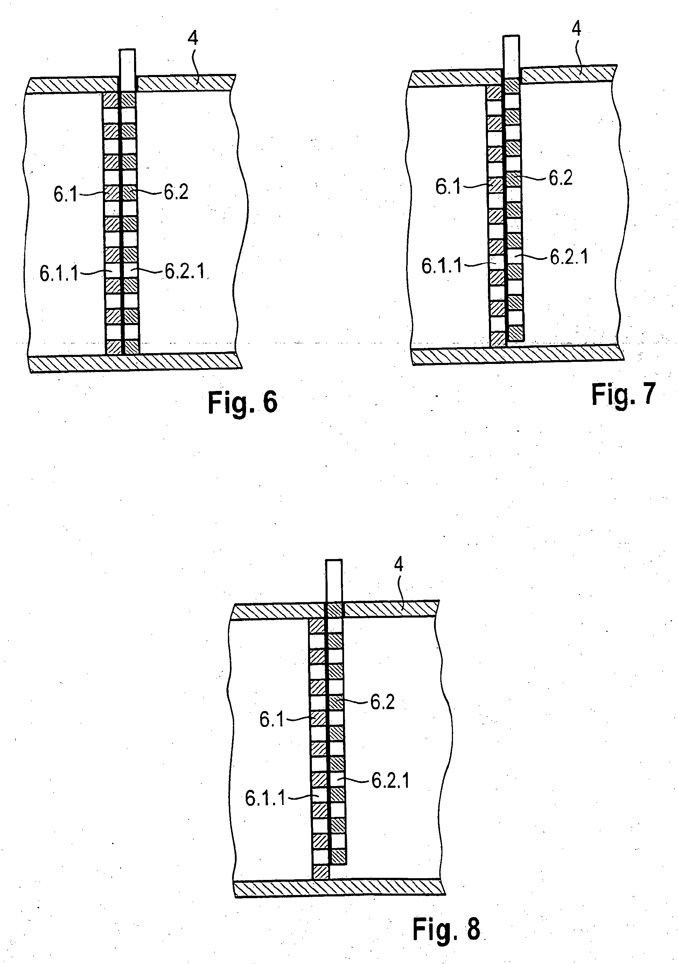

Zur weiteren Erläuterung wird auf die Figuren 6, 7 und 8 verwiesen. Dort erkennt man wiederum die beiden Platten 6.1 und 6.2, eingebaut in Rohrleitung 4. Es versteht sich, dass die Platten entsprechend dem Querschnitt der Rohrleitung 4 kreisrund, quadratisch oder rechteckig sein können.

In Figur 6 ist zu erkennen, dass die Platte 6.1 fest steht, Platte 6.2 hingegen ist verschiebbar, und zwar parallel zur Platte 6.1, wobei die Relativbewegungen der Platten sowohl horizontal als auch vertikal erfolgen können.

Bei der Darstellung gemäß Figur 6 befindet sich Platte 6.2 in einer solchen Position, dass sich die Schlitze 6.1.1 mit den Schlitzen 6.2.1 überdecken. Die Schlitze der beiden Platten haben dieselbe Kontur und sind gleich groß. Bei Figur 6.1 findet kaum eine Dämpfung der Strömung statt.

Bei der Darstellung gemäß Figur 7 ist Platte 6.2 gegenüber ihrer Ausgangsposition verschoben und von Figur 6 geringfügig nach oben angehoben. Es findet nur eine teilweise Überdeckung der Schlitze beider Platten statt. Hier wird somit eine stärkere Dämpfung erzeugt.

Bei der Darstellung gemäß Figur 8 findet überhaupt keine Überdeckung oder Überlappung der beiderseitigen Schlitze statt. Vielmehr sperrt die Jalousieeinrichtung 6 den Querschnitt der Rohrleitung 4 völlig ab.

Bei den drei Darstellungen gemäß der Figuren 6, 7 und 8 befindet sich die Turbine jeweils auf der linken Seite der Jalousieeinrichtung 6.

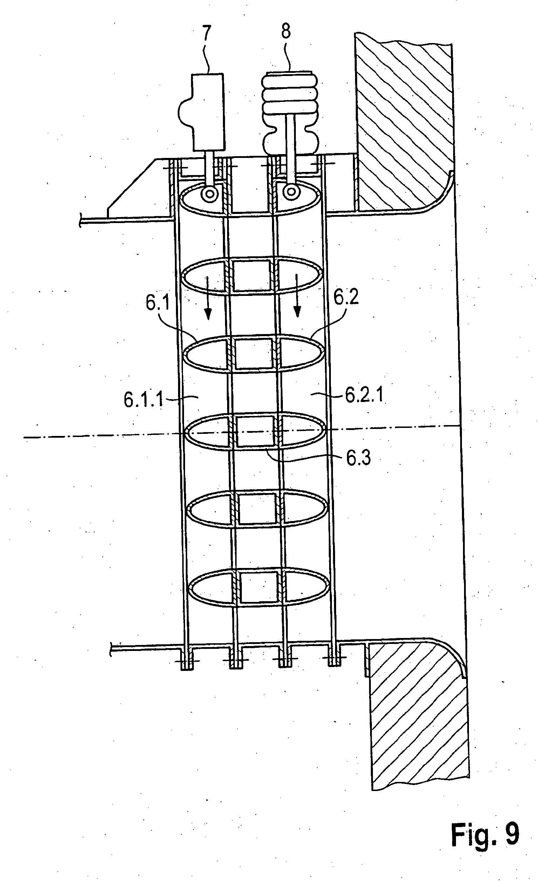

Eine besonders interessante Ausführungsform zeigt Figur 9. Hier umfasst die Jalousieeinrichtung 6 drei Platten 6.1, 6.2 und 6.3. Die mittlere Platte 6.3 steht stets fest, während die beiden äußeren Platten 6.1 und 6.2 senkrecht zur Strömungsrichtung verschiebbar sind. Links der Jalousieeinrichtung 6 befindet sich die hier nicht dargestellte Energieeinheit, und demgemäß rechts die Kammer.

Die beiden äußeren Scheiben 6.1 und 6.3 weisen wiederum Schlitze 6.1.1 und 6.2.1 auf. Die die Schlitze bildenden Kanten sind gerundet, siehe die elliptische Gestalt, und die entsprechende sanfte Erweiterung beziehungsweise Verjüngung (je nach Strömungsrichtung) der Schlitze, zum Reduzieren der Strömungsverluste im ganz geöffneten Zustand.

Die auf der Seite der Kammer 1 befindliche Platte 6.2 ist in Schließposition verbringbar, und zwar in Abhängigkeit von der Wellenintensität.

Platte 6.1, die sich auf der Seite der Energieeinheit 5 befindet, dient zum Steuern des Mengenstromes, der der Energieeinheit 5 zugeführt wird, wiederum in Abhängigkeit von der Wellenintensität:

Ein Aktuator 7 für Platte 6.1 arbeitet mit einer Schwerkraft-Verschlusseinrichtung und dient als Sicherheitsvorrichtung.

Aktuator 8, der der Platte 6.2 zugeordnet ist, ist ein pneumatischer Steuerzylinder.

Die erwähnten Antriebe können rein mechanisch, elektrisch oder hydraulisch sein, je nach Größe und Leistung der Turbinenanlage.

## Patentansprüche

1. Turbinenanlage zum Ausnutzen von Energie aus Meereswellen (2) mit einer Kammer (1), die an ihrem unteren und an ihrem oberen Ende je eine Öffnung (3) aufweist;
mit einer an beiden Enden offenen Rohrleitung (4) zum Führen einer Luftströmung;
wobei das untere Ende der Kammer (1) zum Eintauchen in Meerwasser bestimmt, und die Öffnung (3) des oberen Endes an eines der Enden der Rohrleitung (4) angeschlossen ist;
mit einer von der Rohrleitung (4) umschlossenen, zu diesem koaxial angeordneten Energieeinheit (5);
wobei die Energieeinheit (5) wenigstens einen Turbinenrotor (5.2, 5.3) mit Rotorblättern sowie einen zum Rotor (5.2, 5.3) koaxialen und mit diesem in Triebverbindung stehenden Generator (5.4) umfasst;
mit einer Dämpfungseinrichtung (6), die in der Rohrleitung (4) zwischen der Kammer (1) und der Energieeinheit (5) angeordnet ist; **gekennzeichnet durch** die folgenden Merkmale:
die Dämpfungseinrichtung ist eine Jalousieeinrichtung (6), umfassend wenigstens zwei Platten (6.1, 6.2), die Perforationen (6.1.1, 6.1.2) aufweisen und die wenigstens teilweise den Querschnitt der Rohrleitung (4) ausfüllen;
die Platten (6.1, 6.2) sind relativ zueinander verschiebbar.

2. Turbinenanlage nach Anspruch 1, **dadurch gekennzeichnet, dass** die Jalousieeinrichtung (6) eine feststehende mittlere Platte (6.3) sowie beidseits der feststehenden Platte (6.3) je eine verschiebbare Platte (6.1, 6.2) aufweist.

3. Turbinenanlage nach Anspruch 1 oder 2, **dadurch gekennzeichnet, dass** die Perforationen aus Schlitzen (6.1.1, 6.2.1) bestehen.

## Claims

1. A turbine installation for extracting energy from sea waves (2);
comprising a chamber (1) which comprises one respective opening (3) at its bottom and upper end;
a conduit (4) which is open at both ends for guiding an air flow;
the bottom end of the chamber (1) is provided for submersing in seawater, and the opening (3) at the upper end is connected to one of the ends of the conduit (4);
a power unit (5) which is enclosed by the conduit (4) and is arranged coaxially to said conduit;
the power unit (5) comprises at least one turbine rotor (5.2, 5.3) with rotor blades and a generator (5.4) which is coaxially to the rotor (5.2, 5.3) and is in drive connection with said rotor;
a damping device (6) which is arranged in the conduit (4) between the chamber (1) and the power unit (5);
**characterized by** the following features:
the damping device is a shutter device (6), comprising at least two plates (6.1, 6.2) which comprise perforations (6.1.1, 6.1.2) and which fill the cross section of the conduit (4) at least in part.

2. A turbine installation according to claim 1, **characterized in that** the shutter device (6) comprises a fixed middle plate (6.3) and one respective displaceable plate (6.1, 6.2) on either side of the fixed plate (6.3).

3. A turbine installation according to claim 1 or 2, **characterized in that** the perforations consist of slits (6.1.1, 6.2.1).

## Revendications

1. Centrale à turbines permettant de récupérer l'énergie des vagues marines (2)
avec une chambre (1) présentent respectivement une ouverture (3) en son extrémité inférieure et en son extrémité supérieure ;
avec un conduit tubulaire ouvert (4) aux deux extrémités pour guider l'écoulement d'air ;
où l'extrémité inférieure de la chambre (I) est conçue pour plonger dans l'eau de mer et l'ouverture (3) de l'extrémité supérieure est connectée à l'une des extrémités du conduit tubulaire (4) ;
avec une unité de récupération d'énergie (5) entourée par le conduit tubulaire (4) et disposée coaxialement audit conduit ;
où l'unité de récupération d'énergie (5) comprend au moins un rotor de turbine (5.2, 5.3) avec des pales de rotor de même qu'un générateur (5.4) coaxial par rapport au rotor (5.2, 5.3) et en liaison motrice avec ledit rotor ;
avec un dispositif d'amortissement (6), qui est disposé dans le conduit tubulaire (4) entre la chambre (1) et l'unité de récupération d'énergie (5); présentant les caractéristiques suivantes:
le dispositif d'amortissement est un dispositif à jalousie (6), comprenant au moins deux plaques (6.1, 6.2) qui présentent des perforations (6.1.1, 6.1.2) et remplissant au moins partiellement la section transversale du conduit tubulaire (4) ;
les plaques (6.1, 6.2) sont mobiles en translation l'une par rapport à l'autre.

2. Centrale à turbines selon la revendication 1, **caractérisée en ce que** le dispositif à jalousie (6) comporte une plaque médiane (6.3) fixée à demeure de même qu'une plaque mobile en translation (6.1, 6.2) des deux côtés de la plaque fixée à demeure (6.3).

3. Centrale à turbines selon la revendication 1 ou la revendication 2, **caractérisée en ce que** les perforations consistent en fentes (6.1.1, 6.2.1).
